(19) Europäisches Patentamt
European Patent Office
Office européen des brevets

(11) Veröffentlichungsnummer: **0 258 732 A2**

# (12) EUROPÄISCHE PATENTANMELDUNG

(21) Anmeldenummer: **87111929.3**

(22) Anmeldetag: **18.08.87**

(51) Int. Cl.4: **C08L 67/00** , C08L 69/00 , //(C08L67/00,67:00),(C08L69/00-,67:00)

(30) Priorität: **28.08.86 DE 3629207**

(43) Veröffentlichungstag der Anmeldung: **09.03.88 Patentblatt 88/10**

(84) Benannte Vertragsstaaten: **BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Blinne, Gerd, Dr.**
**Im Woogtal 7**
**D-6719 Bobenheim(DE)**
Erfinder: **Fischer, Juergen, Dr.**
**Thomas-Mann-Strasse 62**
**D-6700 Ludwigshafen(DE)**
Erfinder: **Hisgen, Bernd, Dr.**
**Goethestrasse 6**
**D-6703 Limburgerhof(DE)**
Erfinder: **Portugall, Michael, Dr.**
**Raiffeisenstrasse 7**
**D-6706 Wachenheim(DE)**
Erfinder: **Matthies, Hans Georg, Dr.**
**Homburger Strasse 2**
**D-6700 Ludwigshafen(DE)**

## (54) Faserverstärkte Kunststoffe.

(57) Die Erfindung betrifft faserverstärkte Kunststoffe aus einer Matrix aus einem organischen Polymeren, welches

$-\overset{\overset{O}{\|}}{C}-O-$oder $-O-\overset{\overset{O}{\|}}{C}-O-$Einheiten

enthält, und Verstärkungsfasern aus einem flüssigkristallinen Polymeren, welches

$-\overset{\overset{O}{\|}}{C}-O-$Einheiten

enthält.

Daraus können Fertigteile mit ausgezeichneter Zähigkeit und Steifigkeit hergestellt werden.

EP 0 258 732 A2

## Faserverstärkte Kunststoffe

Die Erfindung betrifft faserverstärkte Werkstoffe, die eine Polymermatrix und Verstärkungsfasern aus flüssig-kristallinen Polymeren enthalten.

Es ist bekannt, daß man durch Einarbeiten von Verstärkungsfasern aus Glas, Kohlenstoff, aromatischen Polyamiden oder Metallen in Kunststoffe deren Festigkeit, Steifigkeit und Zähigkeit verbessern kann. Dieser verstärkenden Wirkung der Fasern sind jedoch durch mangelnde Haftung zwischen Verstärkungsfaser und Polymermatrix Grenzen gesetzt. Auch durch Zusatz verschiedener Hilfsstoffe wie Haftvermittler und Kupplungsmittel gelingt es nicht, die Festigkeits-und Steifigkeitsreserven der Fasern voll auszuschöpfen. Insbesondere das Zähigkeitsniveau der Faserverbundwerkstoffe läßt immer noch zu wünschen übrig.

Der Erfindung lag daher die Aufgabe zugrunde, faserverstärkte Kunststoffe mit erhöhter Festigkeit, Steifigkeit und Zähigkeit zu entwickeln.

Es wurde gefunden, daß diese Aufgabe gelöst wird, wenn die Matrix aus einem organischen Polymeren besteht, welches

$-\overset{\underset{\|}{O}}{C}-O-$oder $-O-\overset{\underset{\|}{O}}{C}-O-$Einheiten

in der Polymerkette enthält, und die Verstärkungsfasern aus einem flüssig-kristallinen Polymeren bestehen, welches

$-\overset{\underset{\|}{O}}{C}-O-$Einheiten

in der Polymerkette enthält.

Fasern aus flüssig-kristallinen Polymeren sind an sich bekannt; ihre Verwendung zur Verstärkung von Polymermatrices ist bisher jedoch noch nicht beschrieben worden. Es ist überraschend, daß Estergruppen enthaltende Polymere weit bessere Zähigkeit, Festigkeit und Steifigkeit aufweist, wenn man sie mit Fasern aus flüssig kristallinen Polyestern statt mit üblichen Glas-oder Kohlenstoff-Fasern verstärkt.

Als Kunststoffmatrix sind grundsätzlich alle Polymeren geeignet, die

$-\overset{\underset{\|}{O}}{C}-O-$oder $-O-\overset{\underset{\|}{O}}{C}-O-$Einheiten

enthalten. Bevorzugt sind gesättigte Polyester, wie Polyethylenterephthalat, Polybutylenterephthalat und Polyester aus Bisphenol A und aromatischen Dicarbonsäuren, sowie Polycarbonate aus Bisphenol A und Phosgen bzw. Diphenylcarbonat; ferner sind geeignet ungesättigte Polyesterharze, Polyester aus langkettigen Alkoholen und Dicarbonsäuren, aromatische Polyester, Polyesteramide und Polyesterimide. Die Polymeren sollten schmelzbar oder in Lösungsmitteln löslich sein, damit sie eine homogene Matrix für die Fasern bilden können. Sie können als Hochpolymere, als niedermolekulare Oligomere oder als Polymervorläufer, die erst als Matrix in Gegenwart der Fasern zur Polymerisation gebracht werden, vorliegen.

Als Verstärkungsfasern sind alle thermotropen flüssig-kristallinen Polymeren geeignet, die

$-\overset{\underset{\|}{O}}{C}-O-$Einheiten

in der Polymerkette enthalten.

Thermotrope flüssigkristalline Polymere sind bekannt. Es handelt sich hierbei um voll-oder teilaromatische Polykondensate wie Polyester, Polyesteramide, Polyetherester, Polyestercarbonate, Polyesteramidimide und ähnliche Polymere. Der Begriff "vollaromatisch" bedeutet hierbei, daß jede im Polymeren vorkommende Monomereinheit mit wenigstens einem aromatischen Ring zum Aufbau der Polymerkette beiträgt. Der Begriff "teilaromatisch" bedeutet, daß ein Teil der die Kette aufbauenden Monomerstrukturen nicht aromatisch, d.h. im allgemeinen aliphatisch (linear oder cyclisch) ist.

Die oben erwähnten Polymerklassen enthalten eine Reihe der für die Erfindung geeigneten flüssig-kristallinen Polymeren, die Auflistung hat aber keinerlei Ausschließlichkeitscharakter.

Die Existenz einer flüssig-kristallinen Phase in der jeweiligen Polymerschmelze und damit die Eignung des Materials zum erfindungsgemäßen Einsatz läßt sich mit Hilfe der Polarisationsmikroskopie nachweisen. Die Methode ist in der DE-AS 25 20 819 ausführlich beschrieben. Zwischen gekreuzten Polarisatoren weisen die Polymerschmelzen, die in einer Schichtdichte von ca. 10 µm zwischen Glasplatten aufgebracht werden, Texturen auf, die mesomorphen Phasen zugeordnet werden können. Eine ausführliche Zusammenstellung der in Frage kommenden Polymeren ist in EP-A 1 340, EP-A 129 372, EP-A 131 846 und EP-A 139 303 enthalten.

Die bevorzugten Polymeren bilden eine flüssigkristalline Phase unterhalb von 400°C; bevorzugt sind solche, die eine flüssig-kristalline Phase unterhalb von 360°C bilden. Besonders bevorzugt sind vollaroamtische Polyester oder vollaromatische Polyesteramide, insbesondere solche mit hoher Teilkristallinität und einem Erweichungsbereich oberhalb von 300°C, der damit genügend weit oberhalb der Verarbeitungstemperatur des Polymeren liegt.

Die Fasern können als kurze Schnittfasern oder als Endlosfasern vorliegen, z.B. in Form von Einzelrovings, unidirektionalen Gelegen, Geweben, Matten oder Vliesen. Dabei können die Fasern B mit untergeordneten Mengen Glas-oder Kohlenstoffasern vermischt sein.

Das Gewichtsverhältnis Polymer zu Fasern in dem fertigen Werkstoff kann in weiten Grenzen - schwanken. Es liegt bevorzugt zwischen 95:5 und 30:70, insbesondere zwischen 90:10 und 50:50.

Das Vermischen von Fasern und Kunststoffmatrix kann nach den verschiedenen üblichen Techniken erfolgen: Man kann z.B. Kurzfasern und Polymerpulver oder -granulat in einem Extruder oder Kneter vermischen; man kann Fasern in eine Polymerschmelze einstreuen; man kann Fasermatten oder -vliese mit einer Polymerschmelze oder -lösung tränken; schließlich kann man Einzelrovings, Fasergelege oder -gewebe durch ein Bad mit geschmolzenem oder gelöstem Polymeren ziehen. Es ist bevorzugt, während des Vermischens oder in einem nachfolgenden Härtungs-oder Verarbeitungsschritt wenigstens kurzzeitig höhere Temperaturen, vorzugsweise über 100°C, insbesondere über 150°C anzuwenden.

Die erfindungsgemäßen Werkstoffe können die üblichen Zusatzstoffe, wie Flammschutzmittel, Füllstoffe, Elastifizierungsmittel, Wärme-und UV-Stabilisatoren, Gleit-und Entformungshilfsmittel, sowie andere, in dispergierter Form vorliegende Polymere, enthalten.

Die erfindungsgemäßen Werkstoffe sind zur Herstellung von Formteilen für die Automobil-und Luftfahrtindustrie, sowie für die Elektro-und Datentechnik geeignet, die hervorragende Steifigkeits-, Festigkeits-und Schlagzähigkeitseigenschaften aufweisen.

Die in den Beispielen genannten Teile und Prozente beziehen sich auf das Gewicht.

## Beispiel 1

Ein flüssig-kristallines Polymeres wurde aus 2 325 Teile Terephthalsäure, 997 Teilen Isophthalsäure, 4143 Teilen 4-Hydroxibenzoesäure, 1101 Teilen Hydrochinon und 1862 Teilen 4,4'-Dihydroxibiphenyl durch Polykondensation hergestellt. Seine inhärente Viskosität, gemessen in 0,1 %iger Lösung in Pentafluorphenol bei 60°C beträgt 2,9 $dl{\bullet}g^{-1}$, die Wärmeformbeständigkeit nach ISO R 75, Methode B ist höher als 250°C.

Dieses flüssig-kristalline Polymere wurde in einer Extruderspinnanlage mit Dreizonenschnecke bei 360°C mit einer Abzugsgeschwindigkeit von 400 $m{\bullet}min^{-1}$ zu Fasern mit einem Durchmesser von 60 µm versponnen, die auf eine Länge von 1 mm geschnitten werden.

30 Teile dieser Fasern werden mit 70 Teilen Polybutylenterephthalat (Viskositätszahl 130) in einem Zweiwellenextruder bei 260°C konfektioniert.

Das erhaltene Granulat wurde zu Standard-Prüfkörpern spritzgegossen. Es wurden die folgenden mechnischen Eigenschaften ermittelt:

| | | |
|---|---|---|
| Zugfestigkeit [$N/mm^2$] | 124 | DIN 53 455 |
| Zug-E-Modul [$N/mm^2$] | 8 500 | DIN 53 457 |
| Schlagzähigkeit [$kJ/m^2$] | 70 | DIN 53 453 |

Das Material hatte eine Dichte von 1,33 $g/cm^3$.

## Beispiel 2

Ein flüssig-kristallines Polymeres wurde wie in Beispiel 1, aber mit folgender Rezeptur hergestellt:

2 658 Teile Terephthalsäure
664 Teile Isophthalsäure
4 143 Teile 4-Hydroxibenzoesäure
1 321 Teile Hydrochinon
1 490 Teile 4,4'-Dihydroxibiphenyl.

Seine inhärente Viskosität beträgt 3,1 $dl{\bullet}g^{-1}$.

Es wurde in der gleichen Anlage wie in Beispiel 1 bei 375°C versponnen, die Fasern wurden auf eine Länge von 1 mm geschnitten.

20 Teile dieser Fasern wurden mit 80 Teilen eines Polycarbonats aus Bisphenol A und Phosgen (Makrolon 3100 der Fa. Bayer) bei 300°C in einem Zweiwellenextruder konfektioniert.

Das erhaltene Granulat wurde zu Standard-Prüfkörpern spritzgegossen.

Es wurden die folgenden mechanischen Eigenschaften ermittelt:

| | | |
|---|---|---|
| Zugfestigkeit [$N/mm^2$] | 105 | DIN 53 455 |
| Zug-E-Modul [$N/mm^2$] | 6 000 | DIN 53 457 |
| Schlagzähigkeit [$kJ/m^2$] | 120 | DIN 53 453 |

Das Material hatte eine Dichte von 1,25 $g/cm^3$.

## Beispiel 3

Ein Rovingstrang, bestehend aus 3000 Einzelfilamenten aus dem nach Beispiel 2 hergestellten flüssig-kristallinen Polymeren wurde von einem Spulenbaum kommend mit einer Geschwindigkeit von 150 $m{\bullet}h^{-1}$ durch ein Tränkbad mit einer 20 %igen Lösung von Polycarbonat in Methylenchlorid gezogen. Der Thermoplastanteil wurde mit Hilfe der Fadenspannung und eines Quetschwalzenpaares auf 40 Vol.% eingestellt. Danach läuft der getränkte Roving durch eine Trockenzone, wobei das Methylenchlorid bei 130°C völlig entfernt wird. Der trockene Roving wird auf eine Spule gewickelt und ist bis zur Weiterverarbeitung beliebig lang lagerfähig.

Beispiel 4

Ein 300 mm breites Rovingband aus parallelen Fäden des flüssig-kristallinen Polymeren nach Beispiel 2 wurde durch ein Tränkbad mit einer 20 %igen Polycarbonat-Lösung in Methylenchlorid geführt. Mit Hilfe eines Quetschwalzenpaares wurde der Fasergehalt auf 55 Vol.% eingestellt. Anschließend wurde beim Durchlaufen eines Umluftofens das Lösungsmittel abgezogen und das trockene flächige Halbzeug auf Rollen gewickelt.

16 Lagen dieses Halbzeugs mit den Abmessungen 400 × 400 cm wurden in gleichsinniger Faserausrichtung übereinanderdrapiert, durch Infrarotstrahlen auf 180°C aufgewärmt und in ein Plattenpreßwerkzeug eingelegt. Bei einer Werkzeugtemperatur von 130°C und einem Preßdruck von 50 bar wurde das erwärmte Gelege zu einer unidirektional verstärkten, 2 mm starken Platte verpreßt. Der E-Modul nach DIN 29 971 in 0°-Prüfrichtung betrug 35 000 N•mm$^2$.

**Ansprüche**

1. Faserverstärkte Kunststoffe, enthaltend

A. eine Matrix aus einem organischen Polymeren, welches

$$-\overset{\overset{O}{\|}}{C}-O-\text{oder}\ -O-\overset{\overset{O}{\|}}{C}-O-\text{Einheiten}$$

in der Polymerkette enthält, und

B. Verstärkungsfasern aus einem flüssig-kristallinen Polymeren, welches

$$-\overset{\overset{O}{\|}}{C}-O-\text{Einheiten}$$

in der Polymerkette enthält.

2. Faserverstärkte Kunststoffe nach Anspruch 1, dadurch gekennzeichnet, daß das Polymere A Polyethylenterephthalat, Polybutylenterephthalat, Polycarbonat oder ein ungesättigtes Polyesterharz ist.

3. Faserverstärkte Kunststoffe nach Anspruch 1, dadurch gekennzeichnet, daß das flüssig-kristalline Polymere ein vollaromatischer Polyester ist, dessen Erweichungsbereich oberhalb der Verarbeitungstemperatur des Polymeren A liegt.

4. Faserverstärkte Kunststoffe nach Anspruch 1, dadurch gekennzeichnet, daß die Verstärkungsfasern in Form von Kurzfasern, Einzelrovings, Fasergelegen, Matten oder Geweben vorliegen.

5. Verwendung der faserverstärkten Kunststoffe zur Herstellung von Formteilen mit hoher Schlagzähigkeit.